(19) Europäisches Patentamt

European Patent Office

Office européen des brevets

(11) **EP 1 093 280 B1**

(12) **FASCICULE DE BREVET EUROPEEN**

(45) Date de publication et mention
de la délivrance du brevet:
**06.05.2004   Bulletin 2004/19**

(51) Int Cl.⁷: **H04M 3/523**

(21) Numéro de dépôt: **00402193.7**

(22) Date de dépôt: **31.07.2000**

(54) **Procédé de distribution d'appels**

Verfahren für das Verteilen von Anrufen

Procedure for distributing calls

(84) Etats contractants désignés:
**AT BE CH CY DE DK ES FI FR GB GR IE IT LI LU MC NL PT SE**

(30) Priorité: **11.10.1999  FR 9912636**

(43) Date de publication de la demande:
**18.04.2001   Bulletin 2001/16**

(73) Titulaire: **ALCATEL**
**75008 Paris (FR)**

(72) Inventeur: **Baruch, Sauveur**
**29460 Daoulas (FR)**

(74) Mandataire: **Sciaux, Edmond et al**
**Compagnie Financière Alcatel**
**Département de Propriété Industrielle,**
**5, rue Noel Pons**
**92734 Nanterre Cedex (FR)**

(56) Documents cités:
**EP-A- 0 740 450        EP-A- 0 835 016**
**EP-A- 0 949 794**

## Description

L'invention concerne un procédé de distribution d'appels. Le procédé de distribution d'appels selon l'invention peut être mis en place dans le cadre d'un réseau comportant le plus souvent un ou plusieurs commutateurs téléphoniques interconnectés, auxquels sont reliés des postes ou terminaux téléphoniques. Certains de ces postes ou terminaux téléphoniques sont destinés à satisfaire des demandes de services ou d'informations parvenant d'utilisateurs sous forme d'appels téléphoniques. Ces appels sont établis via des joncteurs qui permettent aux postes ou terminaux des utilisateurs d'entrer en communication avec un agencement de distribution d'appels intervenant dans le procédé selon l'invention.

Les procédés de distribution d'appels ont beaucoup évolués depuis leur origine. Désormais, les agencements qui permettent leur mise en oeuvre comportent le plus souvent une importante partie logicielle. Ils sont intégrés dans les commutateurs téléphoniques, plus particulièrement dans ceux dits de type privé. Ces commutateurs téléphoniques sont mis à disposition des utilisateurs, par exemple au niveau des entreprises dont ces utilisateurs sont souvent les employés ou les clients. De nombreuses entreprises ont ainsi la possibilité de fournir des informations ou des services à la demande très élaborés.

Les agencements de distribution d'appels sont ainsi souvent un moyen de communication directe entre les entreprises et leurs clients. La qualité de service qu'ils proposent contribue donc fortement à l'appréciation de l'entreprise par ses clients. Les différents procédés de distribution d'appels ont pour fonction essentielle d'acheminer les appels téléphoniques des correspondants vers un opérateur susceptible de répondre à leur attente.

Différents critères sont susceptibles d'intervenir au cours des opérations destinées à conduire à la distribution d'un appel vers un opérateur via un agencement de distribution d'appels. Il est courant que soit pris en compte, l'objet de l'appel ou le temps d'attente déjà supporté par le correspondant pour cet appel. Le personnel exploitant chargé de superviser un agencement de distribution d'appels utilise ces différents critères pour que la meilleure réponse à la question du correspondant soit apportée, en tenant compte des possibilités et disponibilités en matière de traitement alors exploitable en terme d'homme et de machine. Un agencement de distribution d'appels doit évidemment dans la plupart des cas aboutir à une réponse aussi rapide que possible.

On trouve dans l'état de la technique des procédés de distribution d'appels utilisant des agencements de distribution organisés de manière à avoir des files d'attente différentes qui permettent de distribuer les correspondants en fonction des disponibilités des opérateurs et d'attribuer des priorités à ces correspondants en fonction de l'ancienneté de leur appel respectif.

On trouve aussi des solutions de distribution automatique d'appels qui optimisent globalement le traitement des appels vers des groupes de traitement composés de plusieurs agents ayant des compétences semblables (EP-0 835 016). Ces solutions de distribution automatique n'offrent cependant pas une sélection fine des agents les plus en adéquation avec le demandeur et les caractéristiques qui lui sont propres.

On trouve également dans l'état de la technique des routeurs intelligents d'appels qui, pour leur part, permettent de sélectionner en fonction de différents critères un ou plusieurs agents particulièrement adaptés aux attentes du demandeur (EP-0 740 450). Ces routeurs intelligents sont cependant incapables d'effectuer une distribution optimale en terme de temps d'attente, dans le cas où le ou les agents ne sont pas immédiatement disponibles pour répondre au demandeur.

Afin de pallier ces différents problèmes, l'invention propose un procédé de distribution automatique d'appels vers des agents possédant les compétences les plus en adéquation avec l'attente des correspondants, tout en assurant une grande rapidité de cette réponse.

A cet effet, le procédé selon l'invention met en oeuvre une étape de caractérisation du correspondant. Pour chaque appel reçu, un profil d'appel est établi permettant ainsi de cerner le correspondant et ses attentes en lui associant un certain nombre d'attributs. Préalablement chaque agent a défini ses compétences et un superviseur de l'agencement de distribution dispose d'un ensemble de profils d'agents. Chaque profil d'agent contient des caractéristiques essentielles d'un agent qui est alors associé à un ensemble d'attributs. Ainsi, chaque correspondant et chaque agent sont définis par un ensemble d'attributs, de préférence à partir d'une liste unique d'attributs possibles. A chaque appel d'un correspondant, une liste ordonnée d'agents pouvant répondre à l'appel est établie. Cette liste ordonnée d'agents tient compte du profil d'appel et des attributs de chaque agent, une hiérarchie dans la liste ordonnée d'agents pouvant répondre étant mise en place sur la base d'une méthode de calcul dite calcul de coût.

La liste d'agents ainsi ordonnée est transmise vers un agencement de distribution d'appels. Dans une application préférée de l'invention, le procédé selon l'invention fera appel à un agencement de distribution du type de celui décrit dans la demande de brevet français enregistrée sous le n° 96 12184. Un tel agencement propose en outre :

- des premiers moyens dits de distribution primaire assurant le choix d'une unité de transit pour un appel parvenu par un pilote en fonction d'un coût minimum obtenu par comparaison des coûts établis à partir d'indications caractéristiques de la situation présente de chacune des unités de transit alors prévues pour pouvoir être mises en communication avec ce pilote ;

- des seconds moyens dits de distribution secondaire aval assurant le choix d'un groupe de traitement pour un appel parvenu à une unité de transit préalablement vide d'appels, en fonction d'un coût minimum obtenu par comparaison des coûts établis à partir d'indications caractéristiques de la situation présente de chacun des groupes de traitement alors prévus pour pouvoir être mis en communication avec cette unité de transit ;

- des troisièmes moyens dits de distribution secondaire amont assurant le choix d'une unité de transit pour le traitement d'un appel en attente dans cette unité dès disponibilité d'un opérateur pour traitement en fonction d'un coût maximum obtenu par comparaison des coûts établis à partir d'indications caractéristiques de la situation présente de chacune des unités de transit alors prévues pour pouvoir être mises en communication avec le groupe de traitement dont fait partie cet opérateur disponible ;

- des quatrièmes moyens dits de distribution tertiaire assurant un choix d'un opérateur disponible dans un groupe de traitement pour la prise en compte d'un appel provenant d'une unité de transit à partir d'indications caractéristiques de la situation présente du groupe de traitement avec lequel ladite unité de transit a été mise en communication.

Une architecture particulière de la distribution d'appels est également proposée de façon complémentaire pour la mise en oeuvre du procédé selon l'invention.

L'invention concerne donc un procédé de distribution d'appels téléphoniques destiné à permettre l'accès des utilisateurs de postes et/ou terminaux d'un réseau de télécommunications à au moins un service assuré par l'intermédiaire d'au moins un agent ou opérateur, le dit procédé faisant intervenir au moins un pilote recevant les appels téléphoniques d'accès à un service, au moins un groupe d'opérateurs de traitement et au moins une unité de transit pour les appels reçus via un pilote et en attente de traitement par un opérateur, le procédé étant caractérisé en ce qu'il comporte les étapes consistant à :

   déterminer différents profils d'agents ;
   déterminer un profil d'appel ;
   confronter le profil d'appel aux différents profils d'agents pour constituer une liste d'agents aptes à traiter l'appel ;
   distribuer l'appel vers les agents de la liste d'agents ainsi constituée.

Le pilote peut adopter différents modes associés à des directions de routage différentes, ces directions pouvant associer à chaque appel une unité de transit.

Les unités de transit mises en jeu dans l'agencement de distribution d'appels mis en oeuvre par le procédé selon l'invention peuvent être de différents types : il peut y avoir des salles d'attente, des files d'attente ou des pseudo-files d'attente.

Une file d'attente permet de conserver, temporairement et si besoin est, les appels attendant d'être traités tant que ne sont pas commencés les traitements respectifs de ces appels par des opérateurs d'un ensemble de traitement. L'ordre de transmission, vers l'ensemble de traitement, des appels parqués dans une file d'attente peut être de type premier entré, premier sorti, de manière à respecter l'ordre d'arrivée de ces appels.

Une salle d'attente permet également de conserver temporairement les appels attendant d'être traités. Mais, contrairement à une file d'attente, l'ordre de transmission vers l'ensemble de traitement des appels parqués dans une salle d'attente n'est pas de type premier entré, premier sorti, mais dépend d'un mécanisme qui sera décrit ultérieurement.

Une pseudo-file d'attente est destinée à des appels n'ayant pas en fait à subir d'attente en raison du traitement qui va leur être appliqué. Une telle pseudo-file d'attente est par exemple utilisée pour les appels destinés à être re-routés et pour les appels dont on veut décourager la poursuite. Ces appels sont usuellement aiguillés vers un répondeur chargé de communiquer un message de dissuasion sous forme vocale aux demandeurs, par exemple pour leur demander de ne pas rappeler avant un laps de temps donné en cas de surcharge de l'ensemble de traitement.

Dans une application particulière de l'invention, un pilote peut adopter différents modes associés à des directions de routage différentes. En effet, si un appel arrivant à un pilote se voit attribuer un profil d'appel, le pilote est dit en mode ouvert. Au contraire, si pour une raison quelconque, par exemple une saturation des moyens permettant d'attribuer un profil d'appel, un appel arrivant à un pilote ne peut se voir attribuer de profil d'appel, le pilote est dit en mode bloqué. Ainsi, un pilote en mode ouvert distribue les appels sur des directions de routage associées soit à des pseudo-files d'attente, soit à des salles d'attente ; un pilote en mode bloqué distribue pour sa part les appels sur des directions de routage associées soit à des pseudo-files d'attente soit à des files d'attente. Des directions de routage associées à une file d'attente et des directions de routage associées à une salle d'attente peuvent être des directions de routage préférentielles ou de secours sans jamais cohabiter dans le même mode.

Selon une configuration préférentielle de l'agencement de distribution d'appels mis en oeuvre par le procédé selon l'invention, une salle d'attente peut desservir plusieurs pilotes et une salle d'attente peut être desservie par plusieurs directions de distribution.

Les différents aspects et avantages de l'invention apparaîtront plus clairement dans la suite de la description, en référence aux figures qui ne sont données qu'à titre indicatif et nullement limitatif de l'invention et qui sont à présent introduites :

- la figure 1 montre la structure d'un profil d'appel ;
- la figure 2 montre la structure d'un profil d'agent ;
- la figure 3 présente un schéma de principe d'un agencement de distribution d'appels mis en oeuvre par le procédé selon l'invention.

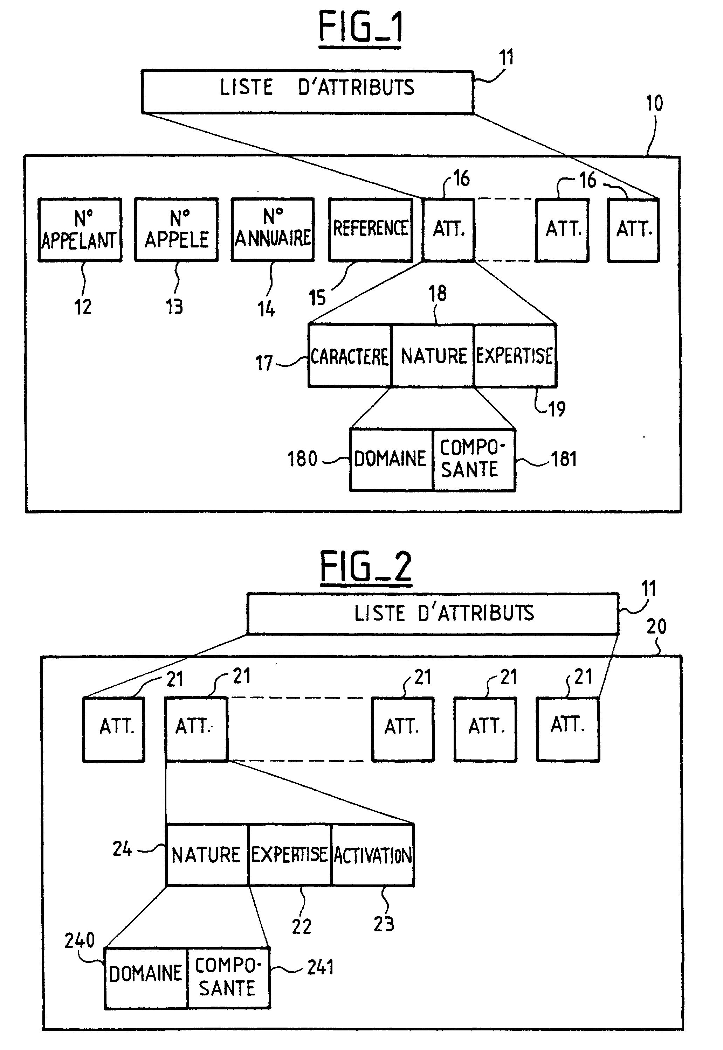

A la figure 1, un profil d'appels 10 est essentiellement caractérisé par un ensemble d'attributs 16 choisis parmi une liste d'attributs 11. Un profil d'appel peut également comporter des informations relatives à un numéro d'appelant 12, à un numéro appelé 13, à un numéro d'annuaire agent 14 dans le cas de l'appel direct d'un agent spécifique, ou encore d'une référence 15 permettant une identification directe de l'appel.

Chaque attribut 16 du profil d'appel 1 peut avoir un caractère optionnel ou obligatoire. Cette information est contenue pour chaque attribut 16 dans un premier champ 17, dit champ de caractère. Un deuxième champ 18 est consacré à la nature de l'attribut et un troisième champ 19, dit champ d'expertise, est destiné à préciser un niveau d'expertise requis pour l'appel.

Le deuxième champ 18 consacré à la nature de l'attribut comporte un identifiant de domaine 180 et un identifiant de composante 181. Par exemple, une langue, un service, un produit sont différents domaines. Le français ou l'anglais sont des composantes du domaine de langue, alors que "la ligne directe" ou une rubrique d'information spécifique sont des composantes du domaine de service. Dans le procédé selon l'invention, il est prévu d'offrir vingt domaines et jusqu'à mille composantes pour l'ensemble des attributs. Les niveaux d'expertise peuvent par exemple varier de 1 à 9.

A la figure 2, un profil d'agent 20 est caractérisé par un ensemble d'attributs 21. Cet ensemble d'attributs 21 est de préférence choisi parmi la liste d'attributs 11 qui servait également de base pour constituer l'ensemble des attributs utilisés pour constituer un profil d'appels.

A chaque attribut du profil d'agent sont associés trois champs distincts : un premier champ 22 correspond au niveau d'expertise de l'agent. Un deuxième champ 23, dit champ d'activation, permet d'indiquer le fait que l'attribut est actif ou non. Si l'attribut n'est pas actif, l'agent ne répond alors pas prioritairement aux appels demandant cet attribut. Un troisième champ 24 du profil d'agent est consacré à la nature de l'attribut. Tout comme le champ 18 du profil d'appel, le troisième champ 24 du profil d'agent comporte un identifiant de domaine 240 et un identifiant de composante 241 qui ont la même fonction que les identifiants de domaine 180 et les identifiants de composante 181 définis pour le profil d'appel.

Les attributs d'un profil d'agent lui sont attribués le plus souvent par un superviseur chargé de gérer l'ensemble du procédé de distribution d'appels. Le superviseur peut modifier ces profils d'appels à sa guise à partir d'une station dite station CCS (Call Center Supervisor dans la littérature anglaise), qui est un logiciel exécuté sur une machine de type auto-commutateur privé.

Le procédé de distribution d'appels selon l'invention établit une liste ordonnée d'agents pouvant répondre à l'appel en fonction du profil de l'appel et des profils des agents. Le procédé selon l'invention met en oeuvre une mécanique de sélection qui permet de détecter tous les agents possédant les attributs obligatoires et ayant un niveau d'expertise le plus proche possible de celui souhaité par le correspondant.

La méthode de calcul pour ordonner les agents ainsi selectionnés est basée sur le calcul dit calcul des coûts. Le calcul des coûts est une opération effectuée pour chaque agent de la liste des agents pouvant répondre à l'appel. Le coût d'un agent prend en compte la somme des écarts entre le niveau d'expertise d'un attribut requis dans le profil de l'appel et le niveau du même attribut dans le profil d'agent. Pour chaque agent, deux coûts sont calculés : un coût correspondant aux attributs obligatoires du profil d'appel et un coût correspondant aux attributs optionnels du profil d'appel. Ce deuxième coût sert à départager des agents ayant les mêmes coûts concernant les attributs obligatoires. Des expressions littérales de ces différents calculs de coût peuvent par exemple être les suivantes :

$$\text{Coût obligatoire} = |(Nag(O) - Nap(O))| * D$$

$$\text{Coût facultatif} = |(Nag(f) - Nap(f))| * D$$

Dans ces différentes expressions,

- D est le poids de la nature de l'attribut ; différents attributs peuvent ainsi avoir une importance plus ou moins grande. Les attributs considérés comme essentiels sont affectés d'un poids important, les autres sont affectés d'un poids plus faible ;
- $Nap(O)$ est le niveau d'expertise de l'attribut obligatoire O du profil d'appel,
- $Nag(O)$ est le niveau d'expertise du même attribut O du profil d'agent ;
- $Nap(f)$ est le niveau d'expertise de l'attribut facultatif f du profil d'appel,
- $Nag(f)$ est le niveau d'expertise du même attribut facultatif f du profil d'agent.

Le procédé selon l'invention permet ainsi de sélectionner en priorité l'agent dont les compétences se rapprochent le plus des besoins de l'appelant. Un expert traite en priorité les demandes nécessitant un niveau d'expertise élevé. Les appels ne nécessitant pas un niveau d'expertise important sont pris en charge par les agents moins experts.

La liste ordonnée des agents est alors de préférence traitée selon une distribution dite distribution CCD (Call Center Distribution dans la littérature anglaise), décrite dans la demande de brevet français enregistrée sous le numéro 96 12184. Une priorité correspondant à l'appel et une temporisation de resélection et de réorientation de l'appel sont également pris en compte par ce mécanisme de distribution. A l'expiration de la temporisation de resélection, la distribution utilisée pour la mise en oeuvre du procédé selon l'invention peut requérir une nouvelle liste d'agents. Dans ce cas, une nouvelle étape de sélection des agents, dite sélection élargie, est effectuée : une nouvelle liste élargie d'agents est fournie. Cette liste prend en compte des agents ayant les compétences correspondant aux attributs obligatoires du profil d'appel mais avec des niveaux d'expertise moindres que ceux initialement requis. Dans le cas d'une surcharge de travail dans le centre d'appel, ce mécanisme permet d'étendre la capacité de réponse à l'appel à des agents ayant un niveau d'expertise moindre.

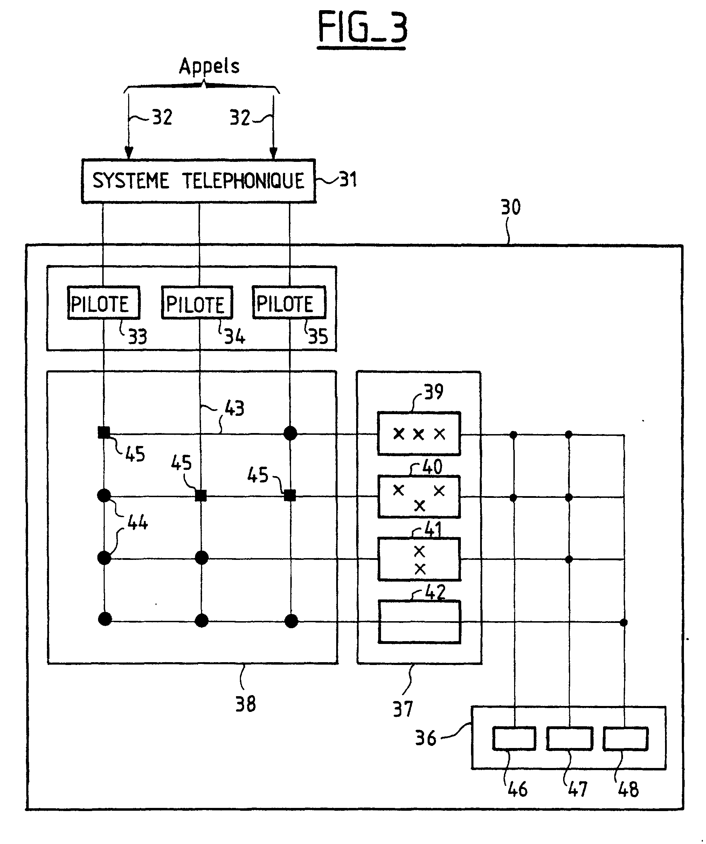

L'agencement de distribution d'appel 30 schématisée en figure 3 est supposée recevoir des appels téléphoniques établis par ou éventuellement vers, des correspondants par l'intermédiaire de postes terminaux téléphoniques et/ou radio-téléphoniques d'un réseau de télécommunication ou système téléphonique 31. Ce réseau est par exemple organisé autour d'un commutateur téléphonique ou encore d'une pluralité de commutateurs téléphoniques inter-connectés. Le réseau 31 comporte par exemple, une pluralité de joncteurs 32 par l'intermédiaire desquels les appels sont transmis par exemple par mise en oeuvre de processus connus tels que ceux dits d'acheminement direct à l'arrivée, ou de ceux dits sélection directe à l'arrivée. Quelle que soit la forme de sélection envisagée, les appels parvenant à l'agencement de distribution d'appels 30 sont dirigés vers des pilotes d'accueil.

A la figure 3, trois différents pilotes d'accueil 33, 34 et 35 sont représentés. Chacun de ces pilotes est affecté à un service déterminé et assure la desserte des appels destinés à ce service. Les services ici considérés sont, par exemple, un service de réservation de place d'une entreprise de transports ou de véhicules, un service téléphonique d'accès direct des clients à un certains nombres d'opérations de télévente, un service d'un réseau bancaire ou de tout autre entreprise équipée à cet effet.

Dans la mesure où les questions peuvent être très variées, il existe en conséquence diverses possibilités de réponses qui sont ici prévues. Ces réponses sont fournies par l'intermédiaire d'un ensemble de traitements 36. Tous les pilotes sont desservis par une unité de direction de routage 38. Les appels parvenant à l'agencement de distribution d'appels 30 par l'intermédiaire des pilotes transitent par l'unité de direction de routage 38 et par un ensemble intermédiaire 37 permettant, si besoin est, un parquage des appels avant qu'ils ne soient pris en compte pour traitement par l'ensemble de traitement 36. L'ensemble intermédiaire 37 de la figure 3 est composé de différentes unités de transit telles que une file d'attente 39, une première salle d'attente 40, une seconde salle d'attente 41 et une pseudo-file d'attente 42. Une autre structure de l'ensemble intermédiaire 37 peut évidemment être envisagée pour la mise en oeuvre du procédé selon l'invention.

Tout appel téléphonique reçu par l'intermédiaire d'un pilote subit une première phase de distribution qui est destinée à assurer son orientation vers une unité de transit de l'ensemble intermédiaire 37.

Différentes directions de routage peuvent associer à chaque appel soit une pseudo-file d'attente, soit une salle d'attente, soit une file d'attente. Chaque pilote peut adopter différents modes associés à des directions de routage différentes. Ainsi, comme il l'a été précédemment mentionné, un pilote est dit en mode ouvert lorsqu'il distribue des appels sur des directions de routage associées soit à des pseudo-files d'attente soit à des salles d'attente. Un pilote en mode bloqué distribue les appels sur des directions de routage associées soit à des pseudo-files d'attente, soit à des files d'attente. Une direction de routage associée à une file d'attente et une direction de routage associée à une salle d'attente peuvent être dites préférentielles ou de secours sans jamais cohabiter dans le même mode.

A la figure 3, différentes directions de routage sont symbolisées par des segments verticaux et horizontaux portant la référence 43. Les segments verticaux et horizontaux peuvent présenter à leur intersection des cercles 44 ou des carrés 45.

Un cercle 44 situé à l'intersection d'un segment horizontal et d'un segment vertical indique que la direction de routage partiellement constituée du segment vertical situé au-dessus du cercle et du segment horizontal situé à droite du cercle constitue une direction de routage dite préférentielle entre le pilote situé dans le prolongement dudit segment vertical et un module de l'ensemble intermédiaire 37 situé dans le prolongement dudit segment horizontal. Une direction de routage est dite préférentielle lorsqu'un pilote qui utilise cette direction de routage fonctionne en mode ouvert.

Un carré 40 situé à l'intersection d'un segment horizontal et d'un segment vertical indique que la direction de routage partiellement constituée de segment vertical situé au-dessus du carré et du segment horizontal situé à droite du carré constitue une direction de routage dite de secours entre le pilote situé dans le prolongement du dit segment vertical et le module de l'ensemble intermédiaire 37 situé dans le prolongement du dit segment horizontal. Une direction de routage est dite de secours lorsqu'un pilote qui utilise cette direction de routage fonctionne en mode ouvert.

Ainsi, à la figure 3, le premier pilote 33 utilise des directions de routage qui envoient préférentiellement les appels vers la première salle d'attente 40 ou la deuxième salle d'attente 41 ou la pseudo-file d'attente 42. Le premier pilote 33 utilise des directions de routage de secours qui envoient les appels vers la file d'attente 39.

Le deuxième pilote 34 utilise des directions de routage qui envoient préférentiellement les appels vers la deuxième salle d'attente 41 et la pseudo-file d'attente 42. Le deuxième pilote 34 utilise des directions de routage de secours qui envoient les appels vers la première salle d'attente 40.

Le troisième pilote 35 utilise des directions de routage qui envoient préférentiellement les appels vers la file d'attente 39 et la pseudo-file d'attente 42. Le troisième pilote 34 utilise des directions de routage de secours qui envoient les appels vers la première salle d'attente 40.

En sortie de l'ensemble intermédiaire 37, les appels sont transmis vers l'ensemble de traitements 36. L'ensemble de traitements 36 est essentiellement composé d'un groupe d'agents locaux 46, d'un groupe d'agents éloignés 47 et d'un opérateur de routage 48. Les agents dits éloignés sont des agents de l'agencement de distribution qui ne sont pas physiquement situés au lieu d'arrivée de l'appel. A la figure 3, les appels issus de la file d'attente 39 peuvent être orientés soit vers les agents locaux 46 ou vers les agents éloignés 47. Les appels issus de la première salle d'attente 40 peuvent être envoyés soit vers les agents locaux 46 soit vers les agents éloignés 47. Les appels issus de la seconde salle d'attente 41 peuvent être envoyés vers les agents éloignés 47 et les appels issus de la pseudo-file d'attente 42 sont orientés uniquement vers l'opérateur de routage 48.

D'autres directions de routage peuvent évidemment être choisies pour la mise en oeuvre du procédé selon l'invention. Cependant, dans tous. les cas, une direction de routage associée à une file d'attente et une direction de routage associée à une salle d'attente peuvent être préférentielle ou de secours sans jamais cohabiter dans le même mode. Une salle d'attente peut desservir plusieurs pilotes. Une salle d'attente peut être desservie par plusieurs directions de distribution. Dans le cadre d'une distribution en mode normal, les appels possédant un profil d'appel sont acheminés à partir du pilote vers une salle d'attente ou une pseudo-file d'attente en fonction d'un algorithme de routage.

Dans le cas d'un routage sur salle d'attente, la distribution de l'appel s'effectue selon trois étapes.

Une première étape consiste dans le routage d'appel. Un appel possédant un profil est acheminé vers une direction de routage en fonction du résultat d'un calcul de coût d'un algorithme de routage. Une salle d'attente ou une pseudo-file d'attente est ainsi attribuée à cet appel. Le calcul de coût de l'algorithme de routage est basé sur le calcul d'un coût qui est fonction de la priorité de la direction de routage, d'un indice de remplissage de la salle d'attente, d'un temps de transit moyen des appels en salle d'attente et d'un handicap associé à la direction de routage sur ce temps de transit moyen. La liste de remplissage de la salle d'attente mesure la saturation de la salle d'attente par comparaison du temps de transit moyen en salle d'attente avec un temps d'attente maximum géré pour chaque salle d'attente. Le coût minimum représente la direction qui sera prioritaire.

Dans une deuxième étape, une sélection de ressources est effectuée. Dans cette seconde étape, chaque appel, qui est préalablement associé à un profil d'appel, entrant dans une salle d'attente déclenche une opération de sélection d'agents. Une liste d'agents est alors constituée. Elle est composée :

- des agents aptes à traiter l'appel accompagné d'un coût associé à chaque agent pour cet appel. A coût équivalent, le choix se porte sur l'agent qui détient le plus long temps de repos ;
- d'une priorité matérialisée par un chiffre allant de 0 à 9 ; ce paramètre optionnel exprime l'ordre dans lequel les appels doivent être traités dans le cas de mise en attente de l'appel. Si la priorité n'est pas transmise, celle-ci correspondra, lors d'une troisième étape dite de sélection d'appels par l'agent, à la valeur de la priorité de sélection d'appels de la direction de distribution entre la salle d'attente et le groupe de traitement agents dans lequel l'agent est affecté ;
- éventuellement d'un paramètre de temporisation associé à l'appel. Ce paramètre permet à l'appel en fin de temporisation de sélectionner une nouvelle liste d'agents ou changer la valeur de priorité de l'appel. Dans le cas où il n'y a pas d'agents correspondant au profil de l'appel à traiter, l'appel est extrait de la salle d'attente pour être soit redistribué suivant la direction de routage suivante, soit redirigé vers un autre pilote.

Dans une troisième étape, une sélection d'appels par un agent est effectuée. Lors du retour au repos d'un agent une sélection d'appels est effectuée. Cette sélection d'appels permet à l'agent de traiter parmi les appels en attente en file d'attente ou en salle d'attente l'appel le plus prioritaire. Pour établir la liste des appels sur lesquels un algorithme de sélection d'appels doit être appliqué, l'agent prend en compte le premier appel interruptible de chaque file d'attente qu'il dessert, ainsi que les appels de toutes les salles d'attentes qui possèdent dans leur liste d'agents respectives l'agent en phase de sélection d'appels. Par appel interruptible, il faut comprendre tout appel qui n'est pas à cet instant orienté par exemple sur un message enregistré dont l'écoute n'est pas achevée.

L'algorithme de sélection d'appels identifie alors l'appel possédant la priorité la plus élevée. A priorité équivalente, les appels sont départagés par deux critères : le coût le plus faible et la différence entre l'attente réelle et un handicap sur l'attente réelle la plus faible. Parmi ces deux critères, le superviseur du procédé de distribution désigne celui qui doit être considéré prioritairement.

**Revendications**

1. Procédé de distribution d'appels téléphoniques destiné à permettre l'accès des utilisateurs de postes et/ou terminaux d'un réseau de télécommunications (31) à au moins un service assuré par l'intermédiaire d'au moins un agent (46, 47) ou opérateur (48), le dit procédé faisant intervenir au moins un pilote (33, 34, 35) recevant les appels téléphoniques d'accès à un service, au moins un groupe d'opérateurs de traitement et au moins une unité de transit (39, 40, 41, 42) pour les appels reçus via un pilote et en attente de traitement par un opérateur, le procédé comportant les étapes consistant à :

   déterminer différents profils d'agents (20);
   déterminer un profil d'appel (10);
   confronter le profil d'appel aux différents profils d'agents

   **caractérisé en ce que** un pilote peut adopter différents modes associés à des directions de routage différentes, ces directions pouvant associer à chaque appel une unité de transit permettant soit de ne pas leur faire subir d'attente, ci-après appelé pseudo-file d'attente, soit de les conserver temporairement en vue de leur transmission vers l'ensemble de traitement, ladite transmission étant effectuée de manière à respecter l'ordre d'arrivée desdits appels, ci-après appelé file d'attente, ou selon un ordre différent de l'ordre d'arrivée, ci-après appelé salle d'attente.

2. Procédé de distribution d'appels téléphoniques selon la revendication 1,dans lequel les profils d'appel (10) et les profils d'agent (20) sont constitués notamment d'attributs (16,21) choisis parmi une unique liste d'attributs (11).

3. Procédé de distribution d'appels téléphoniques selon l'une des revendications précédentes, dans lequel un attribut (16) d'un profil d'appel (10) comporte un champ de caractère (17), un champ (18) consacré à la nature de l'attribut du profil d'appel (10), et un champ d'expertise (19).

4. Procédé de distribution d'appels téléphoniques selon l'une des revendications précédentes, dans lequel un attribut (21) d'un profil d'agent (20) comporte un champ d'expertise (22), un champ d'activation (23) et un champ (24) consacré à la nature de l'attribut du profil d'agent (20).

5. Procédé de distribution d'appels téléphoniques selon l'une des revendications précédentes, dans lequel la liste ordonnée d'agents aptes à traiter l'appel est établie à l'aide d'un calcul de coût, un premier coût correspondant à des attributs obligatoires du profil d'appel, et un second coût correspondant à des attributs facultatifs du profil d'appel étant établis.

6. Procédé de distribution d'appels téléphoniques selon l'une des revendications précédentes, dans lequel une liste élargie d'agents est constituée à l'expiration d'une temporisation de resélection.

7. Procédé de distribution d'appels téléphoniques selon l'une quelconque des revendications 1 à 6, dans lequel un pilote en mode ouvert distribue les appels sur des directions de routage associées soit à des pseudo-files d'attente (42), soit à des salles d'attente (40, 41).

8. Procédé de distribution d'appels téléphoniques selon l'une quelconque des revendications 1 à 7, dans lequel un pilote en mode bloqué distribue les appels sur des directions de routage associées soit à des pseudo-files d'attente (42), soit à des files d'attente (39).

9. Procédé de distribution d'appels téléphoniques selon l'une quelconque des revendications 1 à 8, dans lequel les directions de routage associées à une file d'attente (39) et les directions de routage associées à une salle d'attente (40) peuvent être des directions de routage préférentielles ou de secours sans jamais cohabiter dans le même mode.

10. Procédé de distribution d'appels téléphoniques selon l'une quelconque de revendications 1 à 9, dans lequel une salle d'attente (40, 41) peut desservir plusieurs pilotes.

11. Procédé de distribution d'appels téléphoniques selon l'une quelconque de revendications 1 à 10, dans lequel une salle d'attente (40, 41) peut être desservie par plusieurs directions de routage.

**Patentansprüche**

1. Verfahren für das Verteilen von Telefonanrufen, das dazu bestimmt ist, den Zugang der Benutzer von Apparaten und/oder Terminals eines Telekommunikations-Netzwerks (31) zu mindestens einem Servicebereich zu ermöglichen, der mit Hilfe von mindestens einem Agenten (46, 47) oder Operator (48) bereitgestellt wird, wobei an diesem Verfahren mindestens ein Pilot (33, 34, 35) beteiligt ist, der Telefonanrufe für den Zugang zu einem Servicebereich empfängt, mindestens eine Gruppe von Bearbeitungs-Operatorplätzen und mindestens eine Transiteinheit (39, 40, 41, 42) für die über einen Piloten empfangenen Anrufe, die auf die Bearbeitung durch einen Operator warten, wobei das Verfahren **dadurch gekennzeichnet ist, dass** es die folgenden Schritte aufweist:

Bestimmen verschiedener Agentenprofile (20);
Bestimmen eines Anrufprofils (10);
Gegenüberstellen des Anrufprofils mit den verschiedenen Agentenprofilen,

**dadurch gekennzeichnet, dass** ein Pilot verschiedene Betriebsmodi annehmen kann, die unterschiedlichen Routing-Richtungen zugeordnet sind, wobei diese Richtungen jedem Anruf eine Transiteinheit zuweisen können, die es ihnen ermöglicht, entweder nicht zu warten (nachfolgend als Pseudo-Warteschlange bezeichnet), oder die Anrufe vorübergehend bis zu ihrer Weiterleitung an die Bearbeitungseinrichtung aufzubewahren, wobei diese Weiterleitung in einer Weise erfolgt, dass die Reihenfolge des Eintreffens dieser Anrufe berücksichtigt wird (nachfolgend als Warteschlange bezeichnet), oder in einer Reihenfolge, die von der Reihenfolge des Eintreffens abweicht (nachfolgend als Warteraum bezeichnet).

2. Verfahren für das Verteilen von Telefonanrufen nach Anspruch 1, bei dem die Anrufprofile (10) und die Agentprofile (20) insbesondere aus Attributen (16, 21) bestehen, die aus einer einzigen Attributeliste (11) ausgewählt werden.

3. Verfahren für das Verteilen von Telefonanrufen nach einem der vorhergehenden Ansprüche, bei dem ein Attribut (16) eines Anrufprofils (10) ein Charakterfeld (17), ein Feld (18) für die Art des Attributs des Anrufprofils (10) und ein Feld für Fachkenntnisse (19) aufweist.

4. Verfahren für das Verteilen von Telefonanrufen nach einem der vorhergehenden Ansprüche, bei dem ein Attribut (21) eines Agentenprofils (20) ein Feld für Fachkenntnisse (22), ein Aktivierungsfeld (23) und ein Feld (24) für die Art des Attributs des Agentenprofils (20) aufweist.

5. Verfahren für das Verteilen von Telefonanrufen nach einem der vorhergehenden Ansprüche, bei dem die geordnete Liste der Agenten, die für die Bearbeitung des Anrufs geeignet sind, mit Hilfe einer Kostenrechnung erstellt wird, wobei ein erster Kostenwert für die zwingenden Attribute des Anrufprofils und ein zweiter Kostenwert für die fakultativen Attribute des Anrufprofils ermittelt wird.

6. Verfahren für das Verteilen von Telefonanrufen nach einem der vorhergehenden Ansprüche, bei dem eine erweiterte Agentenliste nach Ablauf einer Verzögerungszeit für eine erneute Auswahl erstellt wird.

7. Verfahren für das Verteilen von Telefonanrufen nach einem beliebigen der Ansprüche 1 bis 6, bei dem ein Pilot im Betriebsmodus "offen" die Anrufe auf Routing-Richtungen verteilt, die entweder Pseudo-Warteschlangen (42) oder Warteräumen (40, 41) zugeordnet sind.

8. Verfahren für das Verteilen von Telefonanrufen nach einem beliebigen der Ansprüche 1 bis 7, bei dem ein Pilot im Betriebsmodus "gesperrt" die Anrufe auf Routing-Richtungen verteilt, die entweder Pseudo-Warteschlangen (42) oder Warteschlangen (39) zugeordnet sind.

9. Verfahren für das Verteilen von Telefonanrufen nach einem beliebigen der Ansprüche 1 bis 8, bei dem die Routing-Richtungen, die einer Warteschlange (39) zugeordnet sind, und die Routing-Richtungen, die einem Warteraum (40) zugeordnet sind, bevorzugte Routing-Richtungen oder Behelfs-Routing-Richtungen sein können, ohne dass sie jemals gleichzeitig im selben Betriebsmodus nebeneinander bestehen.

10. Verfahren für das Verteilen von Telefonanrufen nach einem beliebigen der Ansprüche 1 bis 9, bei dem ein Warteraum (40, 41) mehrere Piloten bedienen kann.

11. Verfahren für das Verteilen von Telefonanrufen nach einem beliebigen der Ansprüche 1 bis 10, bei dem ein Warteraum (40, 41) von mehreren Routing-Richtungen bedient werden kann.

**Claims**

1. A method of distributing telephone calls to provide users of extensions and/or terminals of a telecommunications network (31) with access to at least one service provided by at least one agent (46, 47) or operator (48), said method using at least one call-director (33, 34, 35) which receives telephone calls which access a service, at least one group of processing operators and at least one transit unit (39, 40, 41, 42) for calls received via a call-director and awaiting processing by an operator, the method including the steps consisting of :

determining various agent profiles (20);
determining a call profile (10);
comparing the call profile to the various agent profiles

**characterized in that** a call-director can use various modes associated with different routing directions, these directions possibly associating a transit unit to each call, allowing them not to have to undergo a wait, in which case the transit unit is hereinafter called a pseudo-queue, or to hold them temporarily as regards their transmission to the processing system, said transmission being carried out so that the order of arrival of said calls is preserved, in which case the transit unit is hereinafter called a queue, or according to an order different to the order of arrival, in which case the transit unit is hereinafter called a waiting room.

2. A telephone call distribution method according to claim 1 wherein the call profiles (10) and the agent profiles (20) include in particular attributes (16, 21) chosen from a single list of attributes (11).

3. A telephone call distribution method according to either of the preceding claims wherein an attribute (16) of a call profile (10) includes a character field (17), a field (18) dedicated to the nature of the attribute of the call profile (10), and an expertise field (19).

4. A telephone call distribution method according to any of the preceding claims wherein an attribute (21) of an agent profile (20) includes an expertise field (22), an activation field (23) and a field (24) dedicated to the nature of the attribute of the agent profile (20).

5. A telephone call distribution method according to any of the preceding claims wherein the ordered list of agents able to process the call is drawn up with the aid of a cost calculation establishing a first cost corresponding to mandatory attributes of the call profile and a second cost corresponding to optional attributes of the call profile.

6. A telephone call distribution method according to any of the preceding claims wherein an expanded list of agents is drawn up at the expiry of a reselection time-delay.

7. A telephone call distribution method according to any of claims 1 to 6 wherein a call-director in open mode distributes calls to routing directions associated either with pseudo-queues (42) or with waiting rooms (40, 41).

8. A telephone call distribution method according to any of claims 1 to 7 wherein a call-director in blocked mode distributes calls to routing directions associated either with pseudo-queues (42) or with queues (39).

9. A telephone call distribution method according to any of claims 1 to 8 wherein the routing directions associated with a queue (39) and the routing directions associated with a waiting room (40) can be preferred or back-up routing directions without ever coexisting in the same mode.

10. A telephone call distribution method according to any of claims 1 to 9 wherein a waiting room (40, 41) can serve more than one call-director.

11. A telephone call distribution method according to any of claims 1 to 10 wherein a waiting room (40, 41) can be served by more than one routing direction.

## FIG_1

LISTE D'ATTRIBUTS — 11

10

| N° APPELANT | N° APPELE | N° ANNUAIRE | REFERENCE | ATT. | ATT. | ATT. |

16    16    16

12    13    14    15

| CARACTERE | NATURE | EXPERTISE |

17    18    19

| DOMAINE | COMPO-SANTE |

180    181

## FIG_2

LISTE D'ATTRIBUTS — 11

20

| ATT. | ATT. | ATT. | ATT. | ATT. |

21    21    21    21    21

| NATURE | EXPERTISE | ACTIVATION |

24    22    23

| DOMAINE | COMPO-SANTE |

240    241

# FIG_3

Appels

32    32

SYSTEME TELEPHONIQUE    31

30

PILOTE    PILOTE    PILOTE
33        34        35

43

45    45    45

44

39
× × ×

40
× ×
×

41
×
×

42

38    37

36

46    47    48